# EUROPEAN PATENT SPECIFICATION

(11) **EP 2 001 105 B1**
(45) Date of publication and mention of the grant of the patent: **23.12.2009**
(21) Application number: 07011247.9
(22) Date of filing: 08.06.2007
(51) Int. Cl.: H02K 7/102, F16D 63/00, B60T 7/10, A61G 5/04, G05G 5/00

(54) **Electromagnetic brake device**
Elektromagnetische Bremsvorrichtung
Dispositif de frein électromagnétique

(43) Date of publication of application: 10.12.2008
(73) Proprietor: Chienti Enterprise Co., Ltd., Hsin Chang City, Taipei Hsien (TW)
(72) Inventor: Chang, Feng-Chu, Hsin Chang City Taipei Hsien (TW)
(74) Representative: Reichel, Wolfgang

(56) References cited:
- DE-C- 454 334
- FR-A- 908 443
- FR-A- 1 351 265
- US-A- 4 850 238

## Description

The present invention relates to a brake device and, more particularly, to an electromagnetic brake device.

A conventional electromagnetic brake device comprises a brake disc movably mounted on a propeller shaft to provide a braking effect to a wheel mounted on the propeller shaft, an electromagnetic valve connected to the brake disc, and a control circuit connected to the electromagnetic valve to control operation of the electromagnetic valve. The brake disc has a magnetically attractive face and a friction face. In operation, when the electromagnetic valve is energized by the control circuit, the electromagnetic valve produces a magnetic force to attract the magnetically attractive face of the brake disc to drive the friction face of the brake disc to press a wheel rim of the wheel to provide a braking effect to the wheel.

FR 1 351 265 discloses an electromagnetic brake device according to the preamble of claim 1.

In accordance with the present invention, there is provided an electromagnetic brake device, comprising a motor, a control mechanism and an operation unit. The motor is provided with a recessed stop portion. The control mechanism includes a fixed seat mounted on the motor, an electromagnetic valve mounted on the fixed seat, a press button retractably mounted on the electromagnetic valve to control operation of the electromagnetic valve, and a rotation plate rotatably mounted on the fixed seat and rotatable relative to the fixed seat between a first position where a peripheral wall of the rotation plate presses the press button toward the electromagnetic valve to drive the electromagnetic valve to control the brake disc and a second position where a receiving opening of the peripheral wall of the rotation plate receives the press button so that the press button protrudes outwardly from the electromagnetic valve to stop operation of the electromagnetic valve. The operation unit is mounted between the motor and the control mechanism and movable between a first position where the operation unit is movable freely to rotate the rotation plate of the control mechanism relative to the fixed seat of the control mechanism so that the peripheral wall of the rotation plate presses the press button of the control mechanism, and a second position where the operation unit is stopped by the stop portion of the motor and the receiving opening of the rotation plate receives the press button so that the press button protrudes outwardly from the electromagnetic valve of the control mechanism.

The primary objective of the present invention is to provide an electromagnetic brake device that is operated by pressing a push button.

Another objective of the present invention is to provide an electromagnetic brake device, wherein a user only needs to press the push button to lock or unlock the operation unit and the control mechanism to control operation of the electromagnetic valve so as to control the braking operation of the brake disc, so that the electromagnetic brake device is operated easily and quickly, thereby facilitating the user operating the electromagnetic brake device.

A further objective of the present invention is to provide an electromagnetic brake device, wherein the electromagnetic brake device is assembled easily and quickly, thereby facilitating the user mounting the electromagnetic brake device.

Further benefits and advantages of the present invention will become apparent after a careful reading of the detailed description with appropriate reference to the accompanying drawings.

In the drawings:
Fig. 1 is a perspective view of an electromagnetic brake device in accordance with the preferred embodiment of the present invention.
Fig. 2 is a partially exploded perspective view of the electromagnetic brake device as shown in Fig. 1.
Fig. 3 is a partially side cross-sectional view of the electromagnetic brake device as shown in Fig. 1.
Fig. 4 is another perspective view of the electromagnetic brake device as shown in Fig. 1.
Fig. 5 is a partially exploded perspective view of the electromagnetic brake device as shown in Fig. 4.
Fig. 6 is a schematic operational view of the electromagnetic brake device as shown in Fig. 1.
Fig. 7 is a schematic operational view of the electromagnetic brake device as shown in Fig. 6.

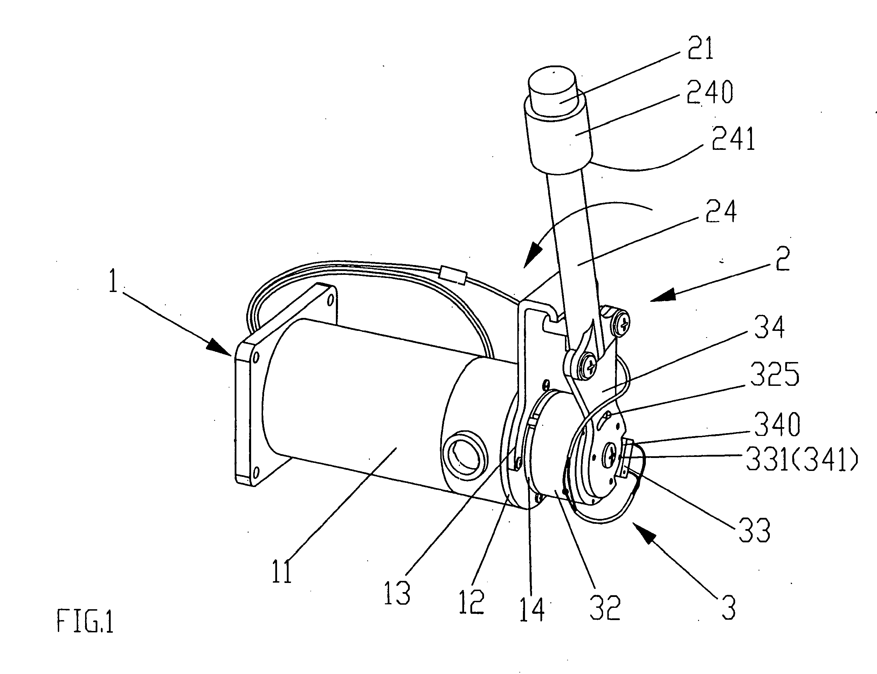

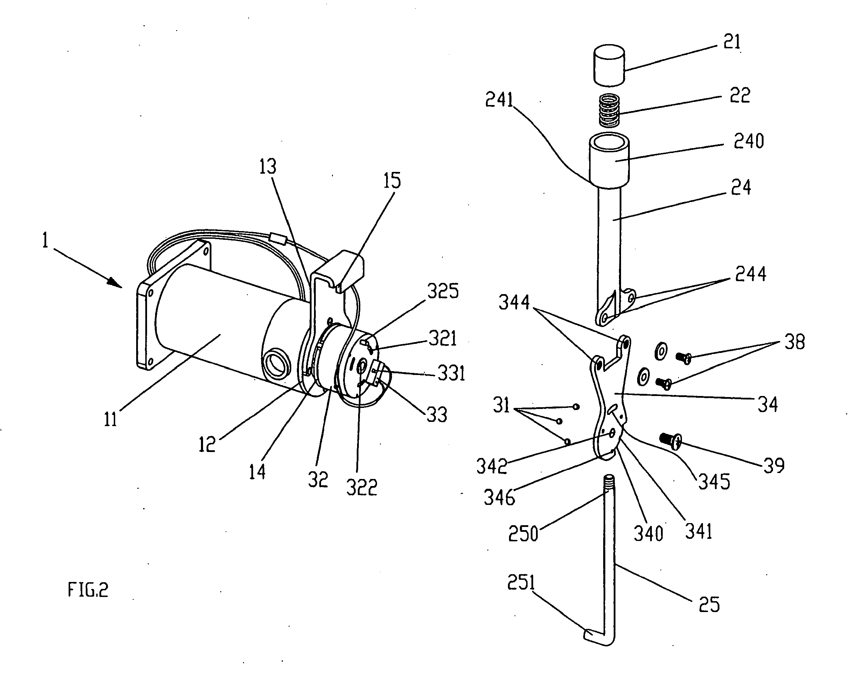

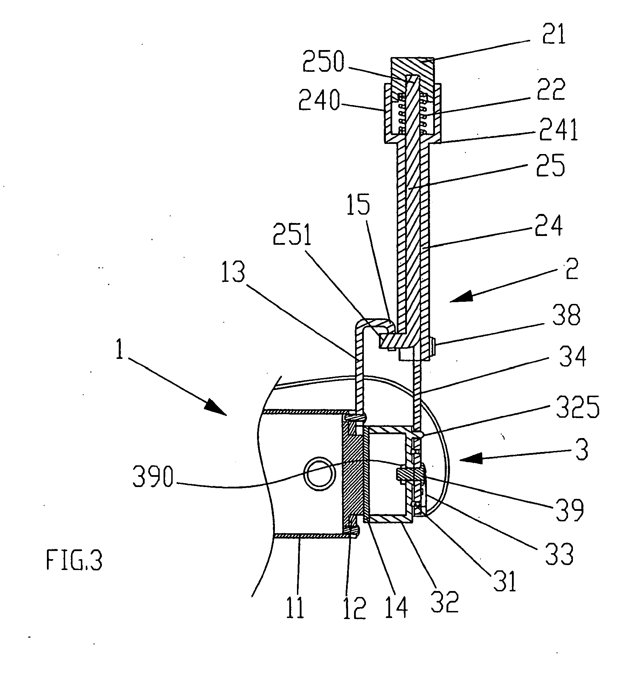

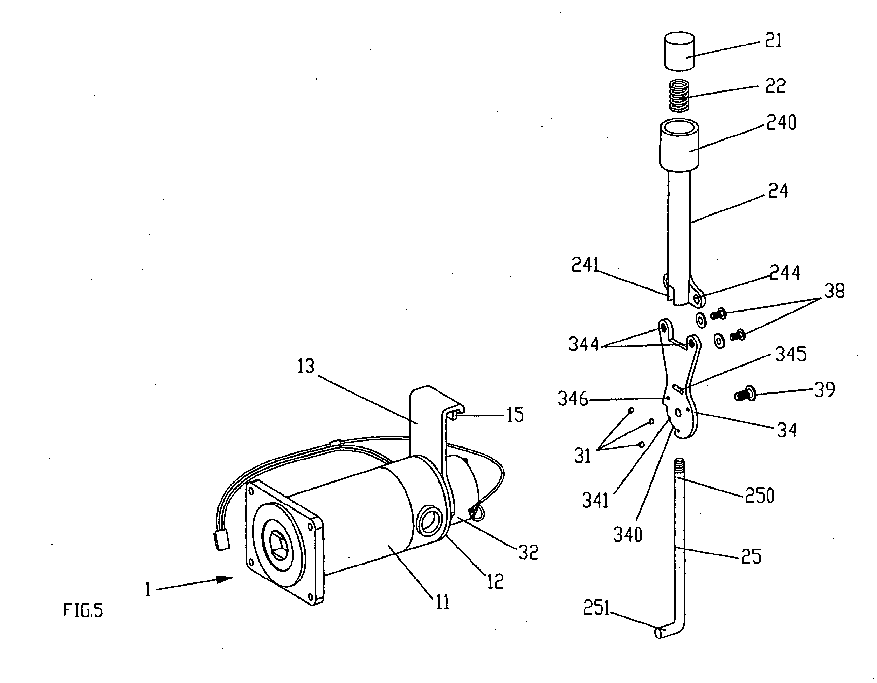

Referring to the drawings and initially to Figs. 1-5, an electromagnetic brake device in accordance with the preferred embodiment of the present invention comprises a motor 1, a control mechanism 3 and an operation unit 2.

The motor 1 is provided with a recessed stop portion 15.

The control mechanism 3 includes a fixed seat 32 mounted on the motor 1, an electromagnetic valve 33 mounted on the fixed seat 32 and connected to a brake disc (not shown), a press button 331 retractably mounted on the electromagnetic valve 33 to control operation of the electromagnetic valve 33, and a rotation plate 34 rotatably mounted on the fixed seat 32 and rotatable relative to the fixed seat 32 between a first position where a peripheral wall 340 of the rotation plate 34 presses the press button 331 toward the electromagnetic valve 33 to drive the electromagnetic valve 33 to control the brake disc and a second position where a receiving opening 341 of the peripheral wall 340 of the rotation plate 34 receives the press button 331 so that the press button 331 protrudes outwardly from the electromagnetic valve 33 to stop operation of the electromagnetic valve 33.

The operation unit 2 is mounted between the motor 1 and the control mechanism 3 and movable between a first position where the operation unit 2 is movable freely to rotate the rotation plate 34 of the control mechanism 3 relative to the fixed seat 32 of the control mechanism 3 so that the peripheral wall 340 of the rotation plate 34 presses the press button 331 of the control mechanism 3, and a second position where the operation unit 2 is stopped by the stop portion 15 of the motor 1 and the receiving opening 341 of the rotation plate 34 receives the press button 331 so that the press button 331 protrudes outwardly from the electromagnetic valve 33 of the control mechanism 3.

In the preferred embodiment of the present invention, the motor 1 includes a cylindrical housing 11, a washer 12 mounted on a side of the housing 11, an upright limit plate 13 having a lower end mounted on the washer 12 and an upper end provided with the stop portion 15, and a pad 14 mounted between the limit plate 13 and the fixed seat 32 of the control mechanism 3. The limit plate 13 of the motor 1 has a substantially 7-shaped cross-sectional profile.

The control mechanism 3 is mounted between the motor 1 and the operation unit 2. The fixed seat 32 of the control mechanism 3 has a substantially cylindrical shape and has a surface formed with a protruding limit post 325 and a plurality of substantially arc-shaped guide slots 321. The rotation plate 34 of the control mechanism 3 has a lower portion rotatably mounted on the fixed seat 32 by a pivot screw 39 which is extended through a through hole 342 of the rotation plate 34 and a through bore 322 of the fixed seat 32 and screwed into a nut 390. The lower portion of the rotation plate 34 of the control mechanism 3 has a surface formed with a substantially arc-shaped limit slot 345 slidable on the limit post 325 of the fixed seat 32 to limit rotation of the rotation plate 34 relative to the fixed seat 32 and a plurality of ball holes 346 to receive a plurality of balls 31 which are slidable in the guide slots 321 of the fixed seat 32 respectively to guide rotation of the rotation plate 34 relative to the fixed seat 32.

The operation unit 2 includes a mounting tube 24 having a lower portion secured on an upper portion of the rotation plate 34 of the control mechanism 3 to rotate the rotation plate 34 of the control mechanism 3, a locking bar 25 movably mounted in the mounting tube 24 and having a lower portion formed with a protruding locking portion 251 protruded outwardly from the lower portion of the mounting tube 24 and detachably locked in the stop portion 15 of the motor 1 to detachably lock the mounting tube 24 onto the stop portion 15 of the motor 1, a push button 21 movably mounted on an upper portion 240 of the mounting tube 24 and secured to an upper portion 250 of the locking bar 25 to move the locking bar 25 to detach the locking portion 251 of the locking bar 25 from the stop portion 15 of the motor 1, and an elastic member 22 mounted on the locking bar 25 and biased between the upper portion 240 of the mounting tube 24 and the push button 21 to push the push button 21 outwardly from the upper portion 240 of the mounting tube 24 and to push the locking portion 251 of the locking bar 25 into the stop portion 15 of the motor 1.

The elastic member 22 of the operation unit 2 is received in the upper portion 240 of the mounting tube 24, and the upper portion 240 of the mounting tube 24 has a stepped shoulder 241 to stop the elastic member 22. The lower portion of the mounting tube 24 of the operation unit 2 is secured on the upper portion of the rotation plate 34 of the control mechanism 3 by two locking screws 38 which are extended through two fixing holes 244 of the lower portion of the mounting tube 24 of the operation unit 2 and screwed into two screw bores 344 of the upper portion of the rotation plate 34 of the control mechanism 3. The locking bar 25 of the operation unit 2 has a substantially inverted L-shaped profile. The lower portion of the mounting tube 24 has a side formed with an elongated slideway 241 in which the locking portion 251 of the locking bar 25 is movable.

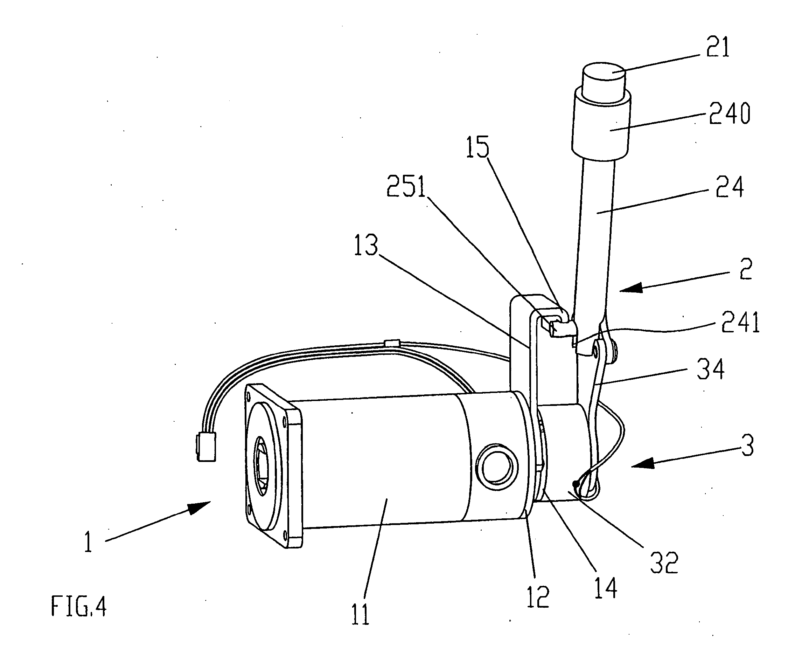

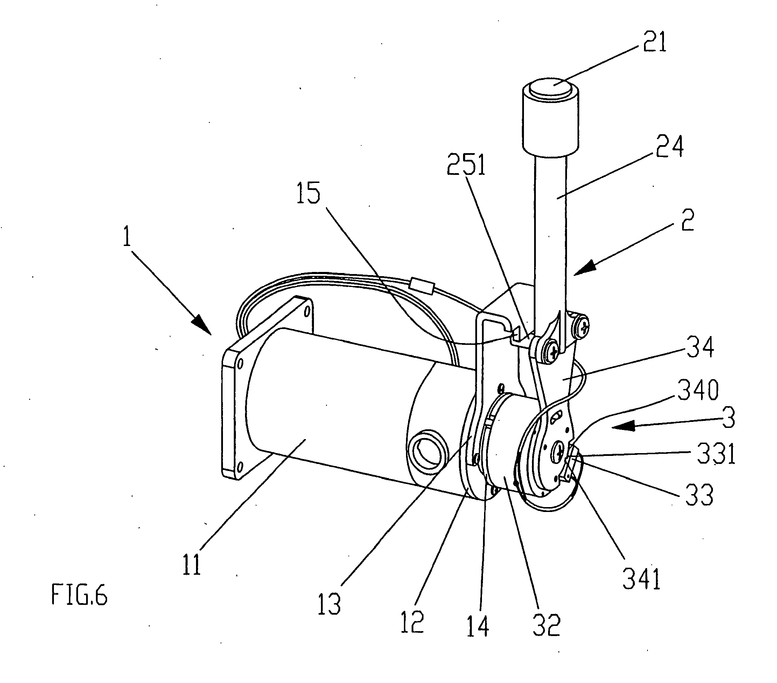

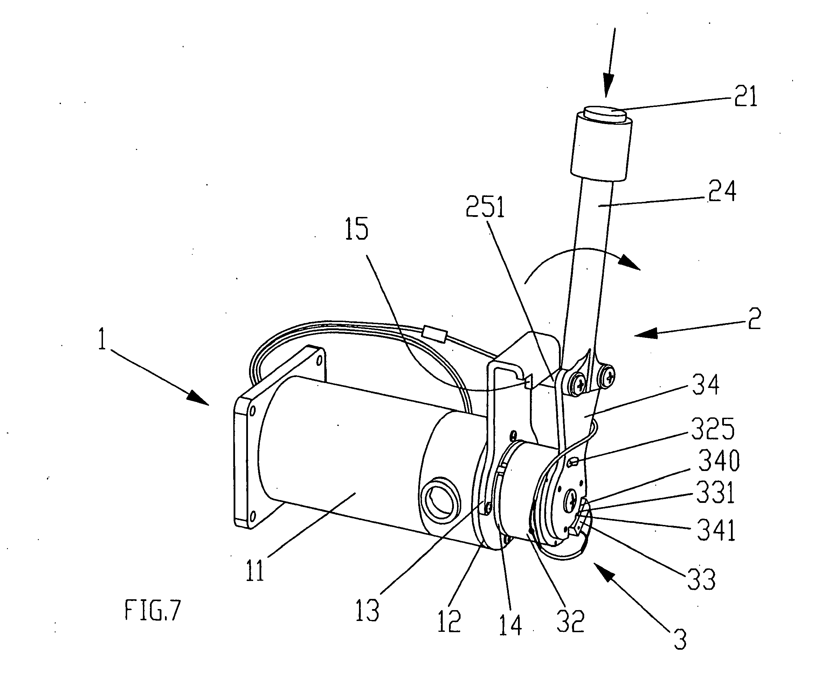

In operation, referring to Figs. 6 and 7 with reference to Figs. 1-5, the elastic member 22 pushes the push button 21 outwardly from the upper portion 240 of the mounting tube 24 and pushes the locking portion 251 of the locking bar 25 into the stop portion 15 of the motor 1 as shown in Figs. 1 and 4 so that the mounting tube 24 of the operation unit 2 is locked onto the stop portion 15 of the motor 1 to lock the rotation plate 34 to prevent the rotation plate 34 from being rotatable relative to the fixed seat 32. Thus, when the locking portion 251 of the locking bar 25 of the operation unit 2 is locked in the stop portion 15 of the motor 1, the receiving opening 341 of the rotation plate 34 receives the press button 331 as shown in Fig. 1 so that the press button 331 protrudes outwardly from the electromagnetic valve 33 of the control mechanism 3 to stop operation of the electromagnetic valve 33.

On the contrary, when the push button 21 is pushed toward the locking bar 25, the locking bar 25 is movable downward in the mounting tube 24 to detach the locking portion 251 of the locking bar 25 from the stop portion 15 of the motor 1 to unlock the mounting tube 24 of the operation unit 2 from the stop portion 15 of the motor 1 and to unlock the rotation plate 34 so that the rotation plate 34 is rotatable freely relative to the fixed seat 32 as shown in Figs. 6 and 7. Thus, when the rotation plate 34 of the control mechanism 3 is rotatable freely relative to the fixed seat 32, the peripheral wall 340 of the rotation plate 34 presses the press button 331 of the control mechanism 3 toward the electromagnetic valve 33 successively to drive the electromagnetic valve 33 to control the brake disc to provide a braking effect.

Accordingly, a user only needs to press the push button 21 to lock or unlock the operation unit 2 and the control mechanism 3 to control operation of the electromagnetic valve 33 so as to control the braking operation of the brake disc, so that the electromagnetic brake device is operated easily and quickly, thereby facilitating the user operating the electromagnetic brake device. In addition, the electromagnetic brake device is assembled easily and quickly, thereby facilitating the user mounting the electromagnetic brake device.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the scope of the invention.

## Claims

1. Electromagnetic brake device, comprising:
a motor (1) provided with a recessed stop portion (15);
a control mechanism (3) including a fixed seat (32) mounted on the motor (1), **characterised by** further comprising an electromagnetic valve (33) mounted on the fixed seat (32), a press button (331) retractably mounted on the electromagnetic valve (33) to control operation of the electromagnetic valve, and a rotation plate (34) rotatably mounted on the fixed seat (32) and rotatable relative to the fixed seat between a first position where a peripheral wall of the rotation plate (34) presses the press button (331) toward the electromagnetic valve (33) to drive the electromagnetic valve to control the brake disc and a second position where a receiving opening of the peripheral wall of the rotation plate (34) receives the press button (331) so that the press button protrudes outwardly from the electromagnetic valve (33) to stop operation of the electromagnetic valve (33);
an operation unit (2) mounted between the motor (1) and the control mechanism (3) and movable between a first position where the operation unit (2) is movable freely to rotate the rotation plate (34) of the control mechanism (3) relative to the fixed seat (32) of the control mechanism (3) so that the peripheral wall of the rotation plate (34) presses the press button of the control mechanism (3), and a second position where the operation unit (2) is stopped by the stop portion of the motor (1) and the receiving opening of the rotation plate receives the press button (331) so that the press button (331) protrudes outwardly from the electromagnetic valve (33) of the control mechanism (3).

2. Electromagnetic brake device in accordance with claim 1, wherein the rotation plate (34) of the control mechanism (3) has a lower portion 5 rotatably mounted on the fixed seat.

3. Electromagnetic brake device in accordance with claim 2, wherein:
the fixed seat of the control mechanism (3) has a surface formed with a protruding limit post;
the lower portion of the rotation plate (34) of the control mechanism (3) has a surface formed with a substantially arc-shaped limit slot slidable on the limit post of the fixed seat (32) to limit rotation of the rotation plate (34) relative to the fixed seat.

4. Electromagnetic brake device in accordance with claim 2, wherein:
the fixed seat (32) of the control mechanism (3) has a surface formed with a plurality of substantially arc-shaped guide slots;
the lower portion of the rotation plate of the control mechanism has a surface formed with a plurality of ball holes (346) to receive a plurality of balls which are slidable in the guide slots of the fixed seat respectively to guide rotation of the rotation plate relative to the fixed seat (32).

5. Electromagnetic brake device in accordance with claim 1, wherein the operation unit (2) includes:
a mounting tube (24) having a lower portion secured on an upper portion of the rotation plate (34) of the control mechanism (3) to rotate the rotation plate of the control mechanism;
a locking bar (25) movably mounted in the mounting tube (24) and having a lower portion formed with a protruding locking portion (251) protruded outwardly from the lower portion of the mounting tube (24) and detachably locked in the stop portion (15) of the motor (1) to detachably lock the mounting tube onto the stop portion (15) of the motor;
a push button movably mounted on an upper portion (240) of the mounting tube (24) and secured to an upper portion of the locking bar to move the locking bar to detach the locking portion of the locking bar (25) from the stop portion (15) of the motor;
an elastic member (22) mounted on the locking bar and biased between the upper portion (240) of the mounting tube and the push button (21) to push the push button outwardly from the upper portion (240) of the mounting tube and to push the locking portion (251) of the locking bar (25) into the stop portion (15) of the motor.

6. Electromagnetic brake device in accordance with claim 5, wherein the lower portion of the mounting tube (24) has a side formed with an elongated slideway (241) in which the locking portion (251) of the locking bar (25) is movable.

7. Electromagnetic brake device in accordance with claim 1, wherein the motor includes:
a cylindrical housing (11);
a washer (12) mounted on a side of the housing 11);
an upright limit plate (13) having a lower end mounted on the washer (12) and upper end provided with the stop portion (15);
a pad (14) mounted between the limit plate (13) and the fixed seat of the ntrol mechanism (3).

8. Electromagnetic brake device in accordance with claim 5, wherein when the locking portion (251) of the locking bar (25) of the operation unit (2) is eked in the stop portion (15) of the motor (1), the receiving opening of the rotation plate (34) receives the press button (331) so that the press button protrudes outwardly :)m the electromagnetic valve of the control mechanism (3) to stop operation of e electromagnetic valve (33).

9. Electromagnetic brake device in accordance with claim 5, wherein when the push button (331) is pushed toward the locking bar (25), the locking bar movable downward in the mounting tube (24) to detach the locking portion (251) of the locking bar (25) from the stop portion (15) of the motor (1) to unlock the mounting tube (24) of .e operation unit (2) from the stop portion (15) of the motor (1) and to unlock the rotation plate (34) so that the rotation plate is rotatable freely relative to the fixed seat (32).

10. Electromagnetic brake device in accordance with claim 9, wherein when the rotation plate (34) of the control mechanism (3) is rotatable freely relative to the fixed seat, the peripheral wall of the rotation plate (34) presses the press button (331) of the control mechanism (3) toward the electromagnetic valve (33) successively to drive the electromagnetic valve.

## Patentansprüche

1. Elektro-magnetische Bremsvorrichtung umfassend:
einen Motor (1), der mit einem angesetzten Anschlagteil (15) versehen ist;
einen Steuerungs-Mechanismus (3), mit einem festen Auflager (32), das an dem Motor (1) montiert ist,
**gekennzeichnet dadurch, dass** sie weiterhin umfasst:
ein elektro-magnetisches Ventil (33), das an dem festen Auflager (32) montiert ist, einen Pressdruckknopf (331), der rückziehbar an dem elektro-magnetischen Ventil (33) befestigt ist, um die Funktion des elektrischen Ventils zu steuern, ein Drehbewegungs-Blech (34), das drehbar an dem festen Auflager (32) montiert ist und relativ zu dem festen Auflager drehbar ist zwischen einer ersten Position, bei der eine äußere Wandung des Drehbewegungs-Blechs (34) den Pressdruckknopf (331) zu dem elektro-magnetischen Ventil (33) hin drückt, um das elektro-magnetische Ventil anzutreiben, um die Bremsscheibe zu steuern, und einer zweiten Position, bei der eine Aufnahmeöffnung der äußeren Wandung des Drehbewegungs-Blechs (34) den Pressdruckknopf (331) aufnimmt, so dass der Pressdruckknopf nach außen hin von dem elektro-magnetischen Ventil (33) absteht, um die Funktion des elektro-magnetischen Ventils (33) anzuhalten; eine Bedien-Einheit (2), die zwischen dem Motor (1) und dem Steuerungs-Mechanismus (3) montiert ist und die bewegbar ist zwischen einer ersten Position, bei der die Bedien-Einheit (2) frei beweglich ist, um das Drehbewegungs-Blech (34) des Steuerungs-Mechanismus (3) relativ zu dem festen Auflager (32) des Steuerungs-Mechanismus (3) zu drehen, so dass die äußere Wandung des Drehbewegungs-Blechs (34) den Pressdruckknopf des Steuerungs-Mechanismus (3) drückt, und einer zweiten Position, bei der die Bedien-Einheit (2) durch das Anschlagteil des Motors (1) angehalten wird und die Aufnahmeöffnung des Drehbewegungs-Blechs den Druckkopf (331) aufnimmt, so dass der Pressdruckknopf (331) nach außen hin von dem elektro-magnetischen Ventil (33) des Steuerungs-Mechanismus (3) hervorsteht.

2. Elektro-magnetische Bremsvorrichtung nach Anspruch 1, wobei das Drehbewegungs-Blech (34) des Steuerungs-Mechanismus (3) einen unteren Abschnitt (5) aufweist, der drehbar an dem festen Auflager montiert ist.

3. Elektro-magnetische Bremsvorrichtung nach Anspruch 2, wobei:
das feste Auflager des Steuerungs-Mechanismus (3) eine Fläche aufweist, die mit einem hervorstehenden Begrenzungs-Stab ausgebildet ist;
wobei der untere Abschnitt des Drehbewegungs-Blechs (34) des Steuerungs-Mechanismus (3) eine Fläche aufweist, die mit einem im wesentlichen bogenförmigen Begrenzungs-Schlitz ausgebildet ist, der auf dem Begrenzungs-Stab des festen Auflagers (32) verschiebbar ist, um die Drehbewegung des Drehbewegungs-Blechs (34) relativ zu dem festen Auflager zu begrenzen.

4. Elektro-magnetische Bremsvorrichtung nach Anspruch 2, wobei:
das feste Auflager (32) des Steuerungs-Mechanismus (3) eine Fläche aufweist, die mit einer Vielzahl von im Wesentlichen bogenförmigen Führungs-Schlitzen ausgebildet ist;
wobei der untere Abschnitt des Drehbewegungs-Blechs des Steuerungs-Mechanismus eine Fläche aufweist, die mit einer Vielzahl von kugelförmigen Löchern (346) ausgebildet ist, um eine Vielzahl von Kugeln aufzunehmen, die gleitbar in dem Führungs-Schlitz des festen Auflagers sind, um entsprechend die Drehbewegung des Drehbewegungs-Blechs relativ zu dem festen Auflager (32) zu führen.

5. Elektro-magnetische Bremsvorrichtung nach Anspruch 1, wobei die Bedien-Einheit (2) enthält:
ein Halterungs-Rohr (24), das einen unteren Abschnitt aufweist, der an einem oberen Abschnitt des Drehbewegungs-Blechs (34) des Steuerungs-Mechanismus (3) gesichert ist, um das Drehbewegungs-Blech des Steuerungs-Mechanismus zu drehen;
ein Verriegelungs-Gestänge (25), das beweglich in dem Halterungs-Rohr (24) montiert ist und das einen unteren Abschnitt aufweist, der mit einem vorstehenden Verriegelungs-Abschnitt (251) ausgebildet ist, welcher nach außen hin von dem unteren Abschnitt des Halterungs-Rohrs (24) hervorsteht und lösbar in dem Anschlagsteil (15) des Motors (1) verriegelt ist, um lösbar das Halterungs-Rohr auf dem Anschlagsteil (15) des Motors zu verriegeln;
einen Druckknopf, der beweglich an einem oberen Abschnitt (240) des Halterungs-Rohrs (24) montiert ist und der an einem oberen Abschnitt des Verriegelungs-Gestänges gesichert ist, um das Verriegelungs-Gestänge zu bewegen, um den Verriegelungs-Abschnitt des Verriegelungs-Gestänges (25) von dem Anschlagteil (15) des Motors zu lösen;
ein elastisches Element (22), das an dem Verriegelungs-Gestänge montiert ist und vorgespannt ist zwischen dem oberen Abschnitt (240) des Halterungs-Rohrs und dem Druckknopf (21), um den Druckknopf nach außen von dem oberen Anschnitt (240) des Halterungs-Rohrs zu drücken und um den Verriegelungs-Abschnitt (52) des Verriegelungs-Gestänges (25) in das Anschlagsteil (15) des Motors zu drücken.

6. Elektro-magnetische Bremsvorrichtung nach Anspruch 5, wobei der untere Abschnitt des Halterungs-Rohrs (24) eine Seite aufweist, die mit einer länglichen Schiebdurchführung (241) ausgebildet ist, in welcher der Verriegelungs-Abschnitt (251) des Verriegelungs-Gestänges (25) beweglich ist.

7. Elektro-magnetische Bremsvorrichtung nach Anspruch 1, wobei der Motor aufweist:
ein zylindrisches Gehäuse (11),
eine Dichtung (12), die an einer Seite des Gehäuses (11) montiert ist,
ein aufrechtes Begrenzungsblech (13), das ein unteres Ende aufweist, das an der Dichtung (12) montiert ist und ein oberes Ende aufweist, das mit dem Anschlagsteil (15) versehen ist,
ein Auflager (14), das zwischen dem Begrenzungsblech (13) und dem festen Auflager des Steuerungs-Mechanismus (3) montiert ist.

8. Elektro-magnetische Bremsvorrichtung nach Anspruch 5, wobei, wenn das Anschlagsteil (251) des Anschlagsgestänges (25) der Bedien-Einheit (2) in das Anschlagsteil (15) des Motors (1) hinein verlängert ist, die Aufnahmeöffnung des Drehbewegungs-Blechs (34) den Pressdruckknopf (331) aufnimmt, so dass der Pressdruckknopf nach außen dem elektro-magnetischen Ventil des Steuerungs-Mechanismus (3) absteht, um die Funktion des elektro-magnetischen Ventils (33) zu stoppen.

9. Elektro-magnetische Bremsvorrichtung nach Anspruch 5, wobei, wenn der Pressdruckknopf (331) zum Verriegelungs-Gestänge (25) hin gedrückt wird, das Verriegelungs-Gestänge abwärts in dem Halterungs-Rohr (25) bewegt wird, um das Verriegelungsteil (251) des Verriegelungs-Gestänges (25) von dem Anschlagsteil (15) des Motors (1) zu lösen, um das Halterungs-Rohr (24) von der Bedien-Einheit (2) von dem Anschlagsteil (15) des Motors (1) zu entriegeln und um das Drehbewegungs-Blech (24)zu entriegeln, so dass das Drehbewegungs-Blech relativ zum festen Auflager (32) frei drehbewegbar ist.

10. Elektro-magnetische Bremsvorrichtung nach Anspruch 9, wobei, wenn das Drehbewegungs-Blech (34) des Steuerungs-Mechanismus (3) relativ zum festen Auflager drehbar ist, die äußere Wandung des Drehbewegungs-Blechs (34) den Pressdruckknopf (331) des Steuerungs-Mechanismus (3) gegen das elektro-magnetische Ventil (33) drückt, um nachfolgend das elektro-magnetische Ventil anzutreiben.

## Revendications

1. Dispositif de frein électromagnétique comportant:
un moteur (1) disposant d'une portion de butée en creux (15);
un mécanisme de commande (3) comprenant un support fixe (32) monté sur le moteur (1), **caractérisé en ce qu'**il comporte en outre un robinet électromagnétique (33) monté sur le support fixe (32), un bouton-pousseoir (331) monté de manière rétractable sur le robinet électromagnétique (33) pour en commander le fonctionnement, et une plaque de rotation (34) montée en rotation sur le support fixe (32) et pouvant tourner relativement au support fixe entre une première position dans laquelle une paroi périphérique de la plaque de rotation (34) appuie sur le bouton-pousseoir (331) en direction du robinet électromagnétique (33) pour actionner le robinet électromagnétique afin de commander le disque de freinage et une deuxième position dans laquelle un creux de la paroi périphérique de la plaque de rotation (34) reçoit le bouton-pousseoir (331) en lui permettant de se mettre en saillie extérieure depuis le robinet électromagnétique (33) pour en arrêter le fonctionnement ;
une unité opérationnelle (2) montée entre le moteur (1) et le mécanisme de commande (3) et mobile entre une première position dans laquelle l'unité opérationnelle (2) peut librement se mouvoir pour assurer la rotation du plateau rotatif (34) du mécanisme de commande (3) relativement au support fixe (32) du mécanisme de commande (3) en sorte que la paroi périphérique de la plaque de rotation (34) presse le bouton-pousseoir du mécanisme de commande (3), et une seconde position dans laquelle l'unité opérationnelle (2) est immobilisée par la portion de butée du moteur (1) et le creux de la plaque de rotation reçoit le bouton-pousseoir (331) pour que celui-ci puisse se mettre en saillie extérieure par rapport au robinet électromagnétique (33) du mécanisme de commande (3).

2. Dispositif électromagnétique de frein selon la revendication 1, dans lequel la plaque de rotation (34) du mécanisme de commande (3) présente une portion inférieure (5) pouvant être mise en rotation par rapport au support fixe.

3. Dispositif électromagnétique de frein selon la revendication 2, dans lequel le support fixe du mécanisme de commande (3) présente une surface comportant des montants en saillie;
la partie inférieure de la plaque de rotation (34) du mécanisme de commande (3) présente une surface comportant un orifice de délimitation en forme d'arc sur les montants en saillie du support fixe (32) pour limiter la rotation de la plaque de rotation (34) relativement au support fixe.

4. Dispositif électromagnétique de frein selon la revendication 2, dans lequel :
le support fixe (32) du mécanisme de commande (3) présente une surface formée avec une pluralité du fentes de guidage principalement en forme d'arcs.
la partie inférieure de la plaque de rotation du mécanisme de commande présente une surface formée par une pluralité d'orifices (346) destinés à recevoir une pluralité de billes pouvant être glissées dans les orifices de guidage du support fixe, respectivement afin de guider la rotation de la plaque de rotation par rapport au support fixe (32).

5. Dispositif électromagnétique de frein selon la revendication 1, dans laquelle l'unité d'opération (2) inclut:
un tube de support (24) ayant une partie inférieure fixée sur une partie supérieure de la plaque de rotation (34) du mécanisme de commande (3) afin de faire tourner la plaque de rotation du mécanisme de commande;
une barre de verrouillage (25) montée mobile dans le tube de support (24) et ayant une partie inférieure formée avec un élément de verrouillage en saillie (251) se développant vers l'extérieur depuis la partie inférieure du tube de support (24) et verrouillée de manière détachable dans la position de butée (15) du moteur (1) pour verrouiller de manière détachable le tube de support sur la partie de butée (15) du moteur;
un bouton poussoir monté de manière mobile sur une partie supérieure (240) du tube de support (24) et fixé à une partie supérieure de la barre de verrouillage pour déplacer la barre de verrouillage pour détacher la partie de verrouillage de la barre de verrouillage (25) de la partie de butée (15) du moteur;
un membre élastique (22) monté sur la barre de verrouillage et orienté entre la partie supérieure (240) du tube de support et le bouton poussoir (21) pour pousser le bouton poussoir vers l'extérieur relativement à la partie supérieure (240) du tube de support et pour pousser la partie de verrouillage (251) de la barre de verrouillage (25) dans la partie de butée (15) du moteur.

6. Dispositif électromagnétique de frein selon la revendication 5, dans lequel la partie inférieure du tube de support (24) présente un côté formé d'une glissière allongée (241), dans lequel la partie de verrouillage (251) de la barre de verrouillage (25) est déplaçable.

7. Dispositif électromagnétique de frein selon la revendication 1, dans lequel le moteur inclut :
un logement cylindrique (11);
une rondelle (12) montée d'un côté du logement (11);
une plaque de limitation supérieure (13) ayant une éxtremité inférieure montée sur la rondelle (30) et une extrémité supérieure équipée de la partie de butée (15);
un coussin (14) monté entre le plaque de limitation (13) et le support fixe du mécanisme de commande (3).

8. Dispositif électromagnétique de frein selon la revendication 5, dans lequel, lorsque la portion de verrouillage (251) de la barre de verrouillage (25) de l'unité opérationnelle (2) reste bloquée dans la position de butée du moteur (1), le creux de la plaque de rotation (34) reçoit le bouton pousseoir (331) de telle manière que le bouton pousseoir se développe vers l'extérieur depuis le robinet électromagnétique du mécanisme de commande (3) afin de stopper le fonctionnement du robinet électromagnétique.

9. Dispositif électromagnétique de frein selon la revendication 5, dans lequel lorsque le bouton poussoir (331) est poussé vers la barre de verrouillage (25), le barre de verrouillage se déplaçant vers le bas dans le tube de support (24), afin de détacher la partie de verrouillage (251) de la barre de verrouillage (25) de la partie de butée (15) du moteur (1) pour ouvrir le tube de support (24) de l'unité d'opération (2) de la partie de butée (15) du moteur (1) et pour déverrouiller la plaque de rotation (34), en sorte que la plaque de rotation peut tourner librement relativement au support fixe (32).

10. Dispositif électromagnétique de frein selon la revendication 9, dans lequel lorsque la plaque de rotation (34) du mécanisme de commande (3) peut tourner de manière libre par rapport au support fixe, la paroi périphérique de la plaque de rotation (34) appuie sur le bouton -poussoir (331) du mécanisme de commande en direciton du robinet électromagnétique (33) successivement pour commander le robinet électromagnétique.
